Europäisches Patentamt

European Patent Office

Office européen des brevets

(11) Publication number: **0 227 864**
**A1**

## EUROPEAN PATENT APPLICATION

(21) Application number: 85309094.2

(22) Date of filing: 13.12.85

(51) Int. Cl.4: **C10G 11/18** , **B01J 8/18**

(43) Date of publication of application:
08.07.87 Bulletin 87/28

(84) Designated Contracting States:
BE DE FR GB IT NL

(71) Applicant: **MOBIL OIL CORPORATION**
**150 East 42nd Street**
**New York New York 10017(US)**

(72) Inventor: **Buyan, Frank Michael**
**1907 Woodland Drive**
**Yardley Pennsylvania 19067(US)**
Inventor: **Ross, Mark Sheldon**
**25 Ontario Way**
**Lawrenceville New Jersey 08648(US)**

(74) Representative: **Cooper, John Anthony et al**
**Mobil Court 3 Clements Inn**
**London WC2A 2EB(GB)**

(54) **FCC feed nozzle apparatus and FCC process.**

(57) Disclosed is a method and apparatus for feeding catalyst, oil and steam into a fluid catalytic cracking (FCC) riser. Oil passes through respective oil lines into a multiplicity of upwardly extending nozzles located at a lower portion of the riser, while steam passes through respective steam lines into the nozzles where it blends with the oil, with the combined oil and steam mixture being fed through the nozzles into the riser. Each oil line and steam line is provided with a valve to separately control oil and steam flow rates, respectively, in each of the nozzles to obtain a substantially constant catalyst to oil ratio across a horizontal cross-section of the riser. The substantially constant catalyst to oil ratio is represented by a substantially isothermal temperature profile across the horizontal riser cross-section, which is detected by measuring the temperature at various points along the horizontal cross-section. The oil and steam flow rates are adjusted by means of the valves until the isothermal temperature profile is achieved.

EP 0 227 864 A1

## FCC FEED NOZZLE APPARATUS AND FCC PROCESS

This invention relates to a method and apparatus for fluid catalytic cracking (FCC) of a hydrocarbon feed in a reactor having a multi-feed nozzle system.

The FCC process employs a catalyst of fine particles which act as a fluid when aerated with a vapor. The fluidized catalyst circulates continuously between the FCC reactor and a regenerator. Catalyst transfers heat from the regenerator to the reactor. The FCC converts heavy hydrocarbons into lighter products.

The catalyst used in an FCC installation is preferably a high activity zeolite catalyst of small size. The catalyst is combined with hydrocarbon feed (oil) and 0 to 15 wt % steam usually 2 to 5 wt % and is transferred in dispersed phase generally upwardly through one or more conversion zones. FCC riser reactors operate with a hydrocarbon residence time of 0.5 to 10 seconds, usually less than 8 seconds, at temperatures up to 538°C (1,000°F) or higher. During cracking, coke deposits on the catalyst. The catalyst entrains hydrocarbon vapors upon removal from the riser. The entrained hydrocarbons are stripped from the catalyst in a catalyst stripping zone. Cracked products and stripped materials are combined and fractionated. Stripped catalyst, containing coke, is regenerated by burning off the coke. The hot, regenerated catalyst is mixed with the oil feed, and the cycle continues.

Improving the contact or mixing between the oil and catalyst in the FCC riser is important. If mixing is not substantially uniform, some oil is overcracked (to light gas and coke) and some oil is not cracked enough (low conversion).

Baumann et al, U.S. Patent Nos. 3,261,776 and 3,353,925 disclose mixing steam, catalyst and hydrocarbon feed and passing them through a series of Venturi zones to improve the mixing.

Griffel et al, U.S. Patent No. 3,654,140, discloses combining steam and oil, and passing them across a valve, through a Venturi nozzle and into an FCC riser to mix with catalyst. In one embodiment, steam and oil are fed through concentric pipes into an FCC riser where the steam and oil mix with catalyst. The steam passes through the annulus between the inner and outer pipe, while oil passes through the inner pipe. Steam and oil rates are controlled by valves.

Snyder, Jr., U.S. Patent No. 3,812,029 discloses injecting combined steam and catalyst into an .FCC riser through an inner nozzle for oil and an outer nozzle for steam or water.

While each of the systems described above mix a catalyst and oil feed, there still remains a need for a system which obtains, as near as possible, a uniform ratio of catalyst to oil feed across a riser. These references may provide uniform dispersion of oil and steam across a riser, but if the catalyst distribution is bad the cat/oil ratios across the riser will vary. A perfect oil distribution is bad if the catalyst distribution is bad. A way has now been discovered to improve catalyst/oil mixing in an FCC riser, even a riser with poor catalyst distribution.

Accordingly, the present invention provides a process of feeding oil and catalyst to an FCC riser, by passing hot regenerated catalyst from a catalyst regenerator into a lower portion of a riser reactor by passing oil into a plurality of upwardly extending nozzles spaced about the lower portion of the riser wherein the oil and catalyst are mixed and the oil is cracked in the riser to provide cracked products which are recovered and spent catalyst which is regenerated in the regenerator characterized by controlling the rate of flow of oil through at least a portion of the nozzles, to produce a more uniform mixing of catalyst and oil in the riser.

Fig. 1 is a prior art riser.

Fig. 2a is a top view of a lower portion of an FCC riser steam/oil distribution system of the present invention.

Fig. 2b is a side view of an FCC riser feed mixer of the present invention.

Fig. 3a shows one feed nozzle.

Fig. 3b shows an oil header and the nozzles of the present invention.

Fig. 4 shows the connection of a steam line to an oil line.

Fig. 5 shows the steam and oil lines connected to the central nozzle.

Fig. 6a is a top view of the riser showing a typical temperature profile obtained without control of oil flow.

Fig. 6b is a top view of the riser showing a typical temperature profile obtained with the invention.

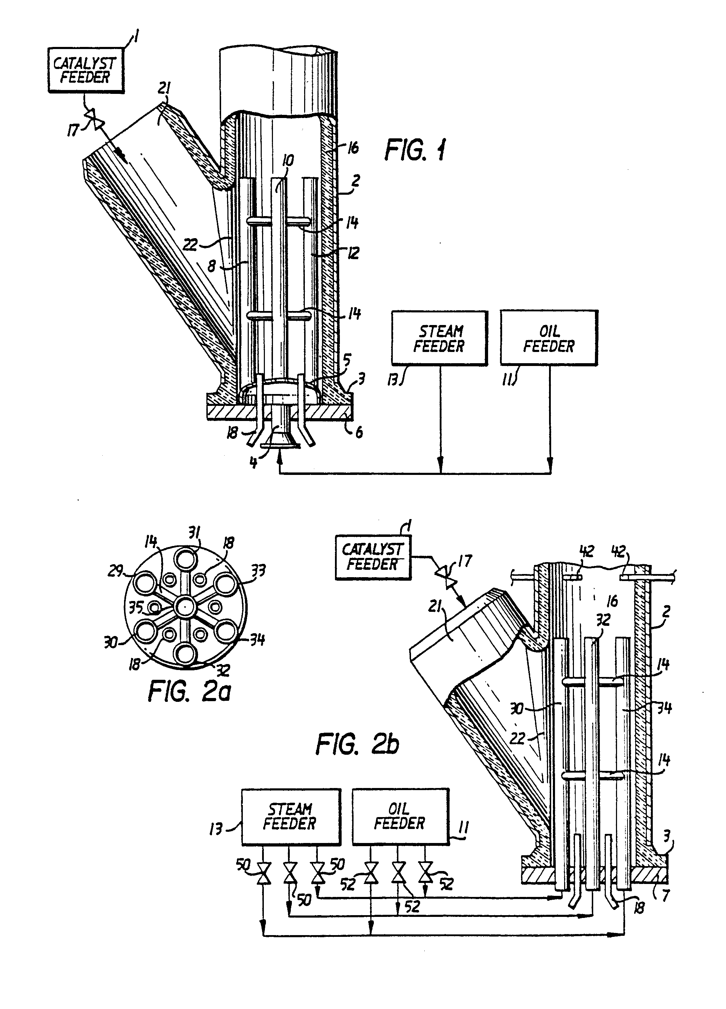

A known system for mixing catalyst and oil in a riser is shown in Fig. 1. Feed nozzles 8, 10, 12, and others (not shown), connect to plenum chamber 5. Liquid or vaporized oil from feeder 11 mixes with 0 to 15 wt % steam from feeder 13 and the oil, or mixture of oil and steam, enters plenum chamber 5 through a central inlet pipe 4 in a bottom flange 6 of a riser 2. The oil passes through the nozzles into riser 2, at the bottom. Riser 2 may be lined with conventional insulation or refractory material 16. Regenerated catalyst from feeder 1 (the regenerator) passes through a slide valve 17 into conduit 21, connected via port 22 to a lower portion of a side wall of riser 2. Emergency steam nozzles 18 at the bottom of the riser 2 dislodge any catalyst plugs which may form. The bottom of the riser 2 is sealed by a plenum chamber flange 6, attached to the riser flange 3. The nozzles are about as high, or slightly higher than, the catalyst port 22. Braces 14 connect and support the nozzles 8, 10 and 12 and others. The catalyst combines with the oil exiting the nozzles and the catalyst/oil mixture travels up riser 2, which has its outlet attached to a reactor vessel (not shown).

The prior art system works but is not ideal. The flow of oil into the individual nozzles is not controllable and the oil flow may not be uniform across the riser cross-section. This is particularly true for a two-phase oil feed, i.e., a partially vaporized liquid. Catalyst distribution across the riser is a function of catalyst flow rate, slide valve position and riser geometry. Although uniform catalyst distribution is the goal, areas in the riser of high and low catalyst to oil ratios, always appear. Non-uniform catalyst flow is a problem, and the present invention solves this by imposing a matching non-uniform oil flow.

The present invention provides individual oil lines for all or some of the nozzles, and means for controlling the flow of oil through at least some of the nozzles. By controlling the oil flow preferably to each nozzle, the catalyst to oil ratio can be controlled to obtain a more uniform catalyst/oil mixture across the horizontal cross-section of the riser 2 and optimize yields, even if catalyst distribution across the riser is poor.

The invention will now be described in greater detail in connection with specific embodiments, which should not be construed as limiting the invention.

In Figs. 2a-5b, elements having the same structure and function as elements in Fig. 1 have the same reference numbers.

In Figs. 2a and 2b the invention comprises a riser 2 lined with insulation 16 and having nozzles 29-35 and conventional emergency steam lines 18. The nozzles 29-35 are connected by braces 14 for support. The nozzles extend through flange 7 into the riser 2. The nozzle flange 7 is attached to a riser flange 3. Catalyst enters riser 2 via conduit 21 and port 22. Catalyst flow from the regenerator, catalyst feeder 1, is controlled by slide valve 17. Steam from a steam feeder 13 may be added through individual lines to each of the nozzles 29-35. For light feeds, no steam is needed. For heavier feeds, 1 to 5 wt % steam, based on oil weight, may be added to improve dispersion of the oil. When very heavy feeds, such as resids, are used, up to 15 wt. % steam may be added. Other light gasses, or low boiling liquids may be added to the oil to help disperse the oil in the riser. Steam is preferred. Oil feeder 11 provides oil to each nozzle 29-35. Fig. 2b shows the individual steam and oil lines for nozzles 30, 32 and 34, but lines exist for each of the nozzles 29-35. Each oil and steam line may have its own valve 50 or 52, respectively, to control the steam and oil flow into each nozzle 29-35.

Valves 50, 52 for each nozzle 29-35 can be adjusted based on a calculated or estimated catalyst distribution to achieve a substantially uniform catalyst to oil ratio across the riser to improve yield and efficiency of hydrocarbon conversion. To determine how to adjust valves 50, 52 to achieve a substantially uniform catalyst to oil ratio, a temperature sensing system may be used. This determines the temperature of the dilute phase in the riser at several places about a horizontal cross-sectional plane passing through the riser. For example, three thermocouples 42 (two shown) are in the riser on substantially the same horizontal plane above the nozzles 31-35. The height above the nozzle is determined by process considerations and can be, for example, 2 m (7 feet). The thermocouples 42, supported by rods which pass through the reactor wall, can slide across the reactor to measure temperatures at various points. As in the Fig. 1 system, the nozzles 29-35 are as high or slightly higher than catalyst entry port 22.

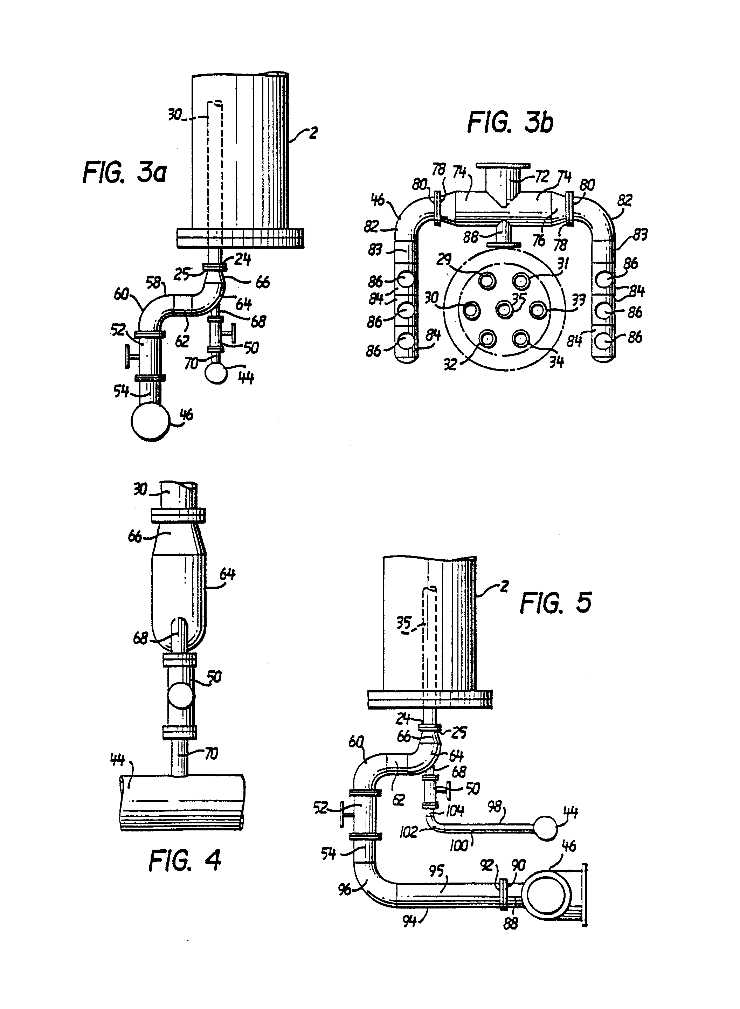

Fig. 3a shows how steam and oil respectively travel from a steam header 44 and an oil header 46 into a nozzle, such as nozzle 30. The piping shown is substantially the same as piping required for the other nozzles 29, 31-35. Oil header 46 (see also Fig. 3b) is connected to nozzle 30 by an oil conduit 58. Oil conduit 58 comprises a pipe 54 attached between oil header 46 and nozzle 30. An oil valve 52, which, for example, can be a globe valve, is between elbow 60 and pipe 54. Pipe 62 is attached to an upstream elbow 64, which is attached to reducer 66, which ends in a flange 25 attached to nozzle flange 24.

As shown in Fig. 3b, oil enters header 46 through inlet 72, and enters side arm 74, and reducers 76, ending in flanges 78. The flanges 78 are attached to flanges 80 of elbows 82, attached to pipe lengths 83 and 84, each of which has an oil header outlet 86 for nozzles 29-34. Nozzle 35 is fed by oil from center oil header outlet 88. Steam passes through header 44, through a steam line 70, up into oil conduit 58 at the bend in elbow 64, as shown in Fig. 3a. Valve 50, which, for example, can be a globe valve, controls steam flow into oil conduit 58. Fig. 4 shows how line 68 enters elbow 64.

The steam header 44, if used, is similar to, but smaller than, oil header 46, shown in Fig. 3b, and is not shown.

Fig. 5 shows the arrangement used to feed oil and steam to central nozzle 35. The oil header 46 is attached to center oil header outlet 38, which is connected to flange 90, which in turn is connected to flange 92 of pipe 95. Pipe 95 is connected to elbow 96, which is connected to pipe 54, which is, in turn, attached to oil valve 52. Oil valve 52 is connected to upstream elbow 60, which is connected to pipe 62, which is in turn connected to downstream elbow 64. Elbow 64 is attached to reducer 66, which has a flange 25 which connects to flange 24 of nozzle 35. The steam header 44 is connected by steam conduit 98 to the oil conduit 95. Steam header 44 is attached to a straight pipe 100, which is attached to elbow 102. Elbow 102 is in turn attached to pipe 104, which is attached to steam valve 50. Steam valve 50 is attached to pipe 68, which is attached into the center portion of elbow 64, as shown in Fig. 4.

Oil passes from the header 46 through outlets 86 into conduits 58, which feed nozzles 29-34. Oil also flows from header 46 through center outlet 88, conduit 95 and enters center nozzle 35. Steam passes from the steam header 44 through steam lines 70, valves 50 and into the oil conduits 58, into nozzles 29-34 and into the riser 2. Steam also passes from the steam header 44 from a center outlet (not shown) into steam conduit 98, into an elbow 64 of oil conduit 95 and then into center nozzle 35.

The system illustrated in Figs. 2a-5b operates as follows. Regenerated catalyst passes from the catalyst feeder 1, the regenerator, through slide valve 17 into catalyst conduit 21, through port 22 into riser 2. In the riser, catalyst mixes with the oil from nozzles 29-35 and passes up through riser 2 and exits into an FCC reactor vessel (not shown).

The catalyst is often poorly distributed in the riser. The distribution is determined by catalyst flow rate, the slide valve 17 position and riser geometry. However, the catalyst to oil ratio in the riser can be made uniform across the riser by causing a matching poor feed distribution. Valves 50, 52 in the oil and steam feed lines, can force the feed to go where the catalyst is.

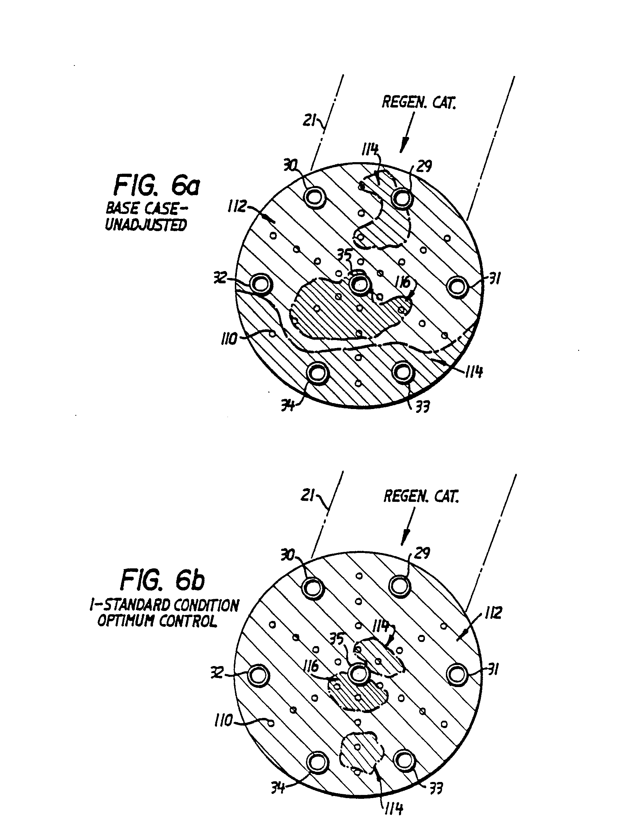

The temperature across the riser cross-section is one indicator of catalyst to oil ratio. Thermocouples 42, located above nozzles 29-35, are slidable across riser 2. The three thermocouple slide rods are spaced apart by 60°. By sliding the thermocouples across the riser temperature measurements can be taken at many locations. Representative locations are illustrated by small circles 110 in Fig. 6a. A substantially isothermal temperature across riser 2 corresponds to a substantially uniform catalyst to oil ratio. To achieve this, the flow rates of steam and/or oil are adjusted by valves 50 or 52, respectively, for each nozzle and then temperature measurements are made, after which the steam and oil rates are again adjusted and temperature measurements again taken, with this sequence being repeated until a substantially isothermal temperature profile is achieved.

Temperature variations less than 85°C (150°F) should be the goal, with even better results achieved with substantially all portions (at least 80%) of the riser having temperatures within 56°C (100°F) or even 28°C (50°F) of the average temperature across the riser at a given elevation. Fig. 6a illustrates a temperature profile across the riser when the valves 50, 52 are wide open (unadjusted) for each of nozzles 29-35. The temperature gradients are shown by numerals 112, 114 and 116. Numeral 112 represents average temperatures, numeral 114 represents temperatures 28 to 83°C (50 to 150°F) below average and numeral 116 represents temperatures 28 to 83°C (50 to 150°F) above average. Fig. 6b shows the substantially isothermal profile which can be achieved by adjusting feed flow through each nozzle.


EXAMPLE


A yield comparison is provided below to show the yields and conversion obtained with the invention as compared to the Fig. 1 system. Although minor variations in reaction conditions occurred, (slightly different feedstock, activity levels for the catalyst and operating conditions) these slight differences were normalized for constant $C_4$-production and for constant coke production to produce a table of comparable yields of the two systems. Using the invention, significantly higher conversion of fresh feed is achieved. More gasoline is produced with the feed nozzle system of the invention at the expense of light and heavy cycle oil. Total $C_4$-yields remain relatively constant. There is a slight drop in the $C_2$ and lighter yield, indicating that less overcracking of oil occurs.

| Conditions | Fig. 1 System (Prior Art) | | The Invention |
|---|---|---|---|
| | Normalized Base at Const. $C_4$ | Normalized Base at Const. Coke | Optimized New Nozzle |
| Cat/Oil weight ratio | 5.9 | 5.7 | 5.9 |
| Riser Top Temp., °F | 983 | 983 | 983 |
| °C | 528 | 528 | 528 |
| Oil-to-Riser Temp., °F | 295 | 313 | 318 |
| °C | 146 | 146 | 146 |
| Regen. Temp., °F | 1276 | 1278 | 1268 |
| °C | 691 | 692 | 687 |

| Yields, Vol. % | | | |
|---|---|---|---|
| Conversion | 58.8 | 57.8 | 61.7 |
| Gasoline | 43.5 | 42.8 | 47.8 |
| LCO | 29.9 | 30.6 | 27.7 |
| HCO | 11.3 | 11.6 | 10.6 |
| $C_4$'s | 9.2 | 8.9 | 9.4 |
| $C_3$'s | 7.3 | 7.1 | 7.8 |
| $C_2$ & Lighter, wt.% | 4.3 | 4.3 | 3.9 |
| Coke, wt.% | 5.7 | 5.6 | 5.6 |
| Gasoline + LCO | 73.4 | 73.4 | 75.5 |
| Gasoline + Potential Alkylate | 63.5 | 62.2 | 67.5 |

Potential alkylate is the gasoline that can be made by alkylating the light olefins produced in the FCC unit with purchased isobutane. Gasoline + potential alkylate represents the most gasoline product that could be made.

In the comparative examples above, 2 wt % steam was added to the feed. There was no recycle of unconverted feed back to the reactor.

The goal of the present invention is to achieve better mixing of catalyst and oil in the riser of an FCC unit. The feed injection system of the present invention presumes that there will be maldistribution of catalyst, and imposes a maldistribution of feed to compensate for the poor catalyst distribution.

Although control of oil flow, and optionally of steam flow, to each feed nozzle will provide the maximum control, it usually will not be necessary to go to these lengths to achieve most of the benefits of the present invention. The least damaging simplification is probably metering constant amounts of steam to all nozzles, while varying the amount of oil. Putting valves on the nozzles, rather than providing an oil valve and a separate steam valve, will in many instances be acceptable. This is especially true when the feed is relatively light and easy to vaporize, or when the feed has been nearly vaporized due to high feed preheat, or when steam is added to each nozzle via an orifice flow control.

It will not be necessary to provide flow control for all nozzles, especially when calculations or experiments show that only a few problem nozzles must have valves. This could be determined experimentally by adding thermowells to a riser, or by measuring wall temperatures in the riser to get some kind of idea about the catalyst distribution. In many units, control of oil flow to a majority of the feed nozzles provides substantial improvement, with 60 to 80% or more of the nozzles being flow controlled giving even better results. Catalyst maldistributions can be detected, and corrected, without temperatures, by systematically varying the flow to different nozzles in the feed nozzle bundle, and observing how the unit reacts. It would be difficult to observe changes in unit operation based upon the coke make, but swings in gasoline production and conversion are much more easily observed. Light gas make, $C_2$ and lighter production, is probably the most sensitive downstream indicator of unit operation.

Another measurement that indicates mixing is the pressure in the riser, or change in pressure across the nozzle, or some other length in the riser, or across the slide valve. Density of the dilute phase mixture may be determined by conventional radiation monitoring techniques, or by accoustical measurements.

A relatively inexpensive, but effective way, of adjusting oil rates, when vaporizing steam is used, is to insert in the base of each feed nozzle where flow control is desired a steam line. High flows of steam cause two phase flow and increased pressure drop and decreased oil flow through that nozzle. When steam flow is diminished, oil flow will increase. There can be effective control of oil flow, even though only steam flow is adjusted. Such an operation would be easy to implement, because the steam lines are small (they are under much higher pressure than the oil in the FCC unit) and small flows are involved, usually less than 5% of the oil flow involved.

It is also possible to use the present invention in conjunction with existing devices used to improve catalyst/oil mixing. If a refiner now uses multiple feed injection points, at several vertical levels within the riser, it is possible to use the present invention in only one or all of the feed injection points.

It is also possible to use a system which permits continuous optimizaton of the FCC process. In such a system, oil flow, or steam flow, or both, may be controlled to each nozzle or most nozzles in the feed nozzle bundle. Computer, or analog controllers may be used to control fluid flows. Automatic valves can be controlled based upon a mixing indicator, e.g., thermocouples located in the FCC riser so that the unit continuously, or intermittently, adjusts nozzle flows to compensate for bad catalyst distribution. Such continuous control is especially important when the unit has to deal with many changes in position of the catalyst slide valve controlling flow of catalyst from the rengerator to the reactor. This is because the slide valve position has a significant effect upon the catalyst distribution in the riser. The optimum flow pattern in the feed nozzle bundle when the slide valve is wide open will probably not be optimum when the slide valve is more than half closed.

## Claims

1. A process of feeding oil and catalyst to an FCC riser 2, by passing hot regenerated catalyst from a catalyst regenerator into a lower portion of a riser reactor by passing oil into a plurality of upwardly extending nozzles 8, 10, 12 spaced about the lower portion of the riser wherein the oil and catalyst are mixed and the oil is cracked in the riser 2 to provide cracked products which are recovered and spent catalyst which is regenerated in the regenerator characterized by controlling the rate of flow of oil through at least a portion of the nozzles 8, 10, 12, to produce a more uniform mixing of catalyst and oil in the riser 2.

2. The process of claim 1, further characterized by measuring the temperature of the catalyst/oil mixture at a point above the nozzles 8, 10, 12 in substantially the same horizontal plane and controlling the flow of oil into at least a portion of the nozzles 8, 10, 12 to achieve a substantially isothermal temperature profile across the riser 2.

3. The process of claim 2 further characterized by measuring the temperature at various locations across the riser with at least one movable thermocouple 42.

4. The process of any preceeding claim wherein the uniformity of catalyst/oil mixing is determined by measuring the conversion of feed or yield of products in the FCC riser 2.

5. The process of any preceeding claim wherein the oil flow to each nozzle 8, 10, 12 is individually controlled.

6. The process of any preceeding claim wherein steam is added to each nozzle 8, 10, 12.

7. The process of claim 6 wherein steam flow to each nozzle 8, 10, 12 is individually controlled.

FIG. 1

FIG. 2a

FIG. 2b

FIG. 3a

FIG. 3b

FIG. 4

FIG. 5

0 227 864

FIG. 6a
BASE CASE-
UNADJUSTED

REGEN. CAT.

FIG. 6b
1-STANDARD CONDITION
OPTIMUM CONTROL

REGEN. CAT.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | EP-A-0 151 882 (MOBIL OIL)<br><br>* Claims * | | C 10 G 11/18<br>B 01 J 8/18 |
| A | US-A-4 532 026 (FRIES)<br><br>* Abstract; figure 2 * | | |
| A | GB-A-1 048 937 (COAL INDUSTRY)<br><br>* Figure 1; claims * | | |
| A | US-A-3 152 065 (SHARP et al.)<br><br>* Figure 4 * | | |
| A | EP-A-0 000 433 (MOBIL OIL)<br><br>* Claim 1 * | | |

| TECHNICAL FIELDS SEARCHED (Int. Cl.4) |
|---|
| C 10 G<br>B 01 J |

The present search report has been drawn up for all claims

| Place of search | Date of completion of the search | Examiner |
|---|---|---|
| THE HAGUE | 11-08-1986 | MICHIELS P. |